# EUROPEAN PATENT APPLICATION

(11) **EP 4 467 358 A1**
(43) Date of publication of application: **27.11.2024**
(21) Application number: 24176160.0
(22) Date of filing: 16.05.2024
(51) Int. Cl.: B60C 1/00, C08L 7/00

(54) **TIRE SIDEWALL COMPOSITION AND TIRE SIDEWALL**

(30) Priority: 23.05.2023 US 202318321839
(71) Applicant: The Goodyear Tire & Rubber Company, Akron, OH 44316 (US)
(72) Inventor: SANDSTROM, Paul Harry, Cuyahoga Falls, 44223 (US)
(74) Representative: Kutsch, Bernd

(57) **Abstract**

A tire (100) is disclosed having a visible sidewall (130). The visible sidewall (130) comprises a rubber composition, the rubber composition comprising, based on parts by weight per 100 parts by weight rubber (phr), a blend of polymers comprising at least a polyisoprene and polybutadiene, a reinforcing filler comprising at least one of silica and carbon black, or a combination of both; a cure package comprising sulfur; and at least three accelerators including diphenyl guanidine, tetra benzyl thiuram disulfide and a sulfenamide.

## Description

### BACKGROUND

High levels of wax are typically used in sidewall compounds to protect against static ozone weather cracking. 6PPD is typically used in sidewalls for dynamic ozone resistance. Moreover, tire sidewall compounds are dynamically flexed through millions of cycles in their expected lifetimes. Cut growth properties should remain excellent during these lifetimes. A blend of natural rubber and polybutadiene is also used in combination with wax and 6PPD to generate desirable cut growth properties.

The use of high levels of wax contributes to visible bloom on the tire surface which can be objectionable to consumers. A tire sidewall composition is desired from which wax levels are reduced and/or eliminated without compromising the durability of the tire sidewall.

### SUMMARY OF THE INVENTION

The invention refers to a tire in accordance with claim 1.

Dependent claims refer to preferred embodiments of the invention.

Disclosed is a tire having a visible sidewall that contains a rubber composition, based on parts by weight per 100 parts by weight rubber (phr): (A) a blend of polymers comprising at least a polyisoprene and polybutadiene; (B) a reinforcing filler; and (C) a cure package comprising sulfur and at least three accelerators including diphenyl guanidine and tetra benzyl thiuram disulfide and a sulfenamide.

In some preferred embodiments, the amount of tetra benzyl thiuram disulfide in the rubber composition is 0.25 to 2.5 phr, preferably 0.5 to 1.5 phr.

In some preferred embodiments, the polyisoprene includes natural rubber or synthetic polyisoprene.

Particular embodiments include from 30 phr to 60 phr of natural rubber or synthetic polyisoprene and from 40 phr to 70 phr of cis 1 ,4-polybutadiene rubber.

In some preferred embodiments, the reinforcing filler contains carbon black, optionally in combination with silica.

In some preferred embodiments, the tire further includes rosin acid. In some preferred embodiments, the amount of rosin acid is from 0.25 to 3.0 phr, preferably from 0.5 to 2.0 phr.

In some preferred embodiments, the amount of diphenyl guanidine is from 0.25 phr to 3.0 phr.

In some preferred embodiments, the amount of sulfenamide is from 0.25 phr to 3.0 phr or from 0.15 phr to 2.5 phr, preferably from 0.5 phr to 2.0 phr or from 0.25 phr to 1 phr.

In some preferred embodiments, the amount of filler is from 30 phr to 70 phr, preferably from 35 phr to 55 phr.

In some preferred embodiments, the rubber composition includes at least a 25% reduction in wax relative to a compound devoid of rosin acid, diphenyl guanidine, and tetra benzyl thiuram disulfide.

In some preferred embodiments, the rubber composition is partially or fully devoid of wax relative to a compound devoid of rosin acid and not containing the disclosed cure package.

In some preferred embodiments, the rubber composition has at least a 25% reduction in 6PPD relative to a compound devoid of rosin acid and not containing the disclosed cure package.

In some preferred embodiments, the rubber composition comprises 1.8 to 2.5 phr of sulfur.

### BRIEF DESCRIPTION OF THE DRAWINGS

The following is a brief description of the drawings, which are presented for the purposes of illustrating the exemplary embodiments disclosed herein.
FIG. 1 is a partial side view of an example of a tire in accordance with some embodiments of the present disclosure.
FIG. 2 is a flow chart illustrating an example of an article formation process in accordance with some embodiments of the present disclosure.

### DETAILED DESCRIPTION OF PREFERRED EMBODIMENTS OF THE INVENTION

The present disclosure may be understood more readily by reference to the following detailed description of desired embodiments included therein and the drawings. In the following specification and the claims which follow, reference will be made to a number of terms which shall be defined to have the following meanings.

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent can be used in practice or testing of the present disclosure.

As used in the specification and in the claims, the term "comprising" may include the embodiments "consisting of" and "consisting essentially of." The terms "comprise(s)," "include(s)," "having," "has," "can," "contain(s)," and variants thereof, as used herein, are intended to be open-ended transitional phrases that require the presence of the named ingredients/steps and permit the presence of other ingredients/steps. However, such description should be construed as also describing compositions, mixtures, or processes as "consisting of" and "consisting essentially of" the enumerated ingredients/steps, which allows the presence of only the named ingredients/steps, along with any impurities that might result therefrom, and excludes other ingredients/steps.

Unless indicated to the contrary, the numerical values in the specification should be understood to include numerical values which are the same when reduced to the same number of significant figures and numerical values which differ from the stated value by less than the experimental error of the conventional measurement technique of the type used to determine the particular value.

All ranges disclosed herein are inclusive of the recited endpoint and independently combinable.

The term "phr" as used herein, and according to conventional practice, refers to "parts of a respective material per 100 parts by weight of rubber." The terms "rubber" and "elastomer" can be used interchangeably, unless otherwise indicated. The terms "rubber composition," "compounded rubber," and "rubber compound" can be used interchangeably to refer to "rubber which has been blended or mixed with various ingredients and materials" and the terms "cure" and "vulcanize" may also be used interchangeably herein, unless otherwise indicated and such terms are well known to those having skill in the rubber mixing or rubber compounding art.

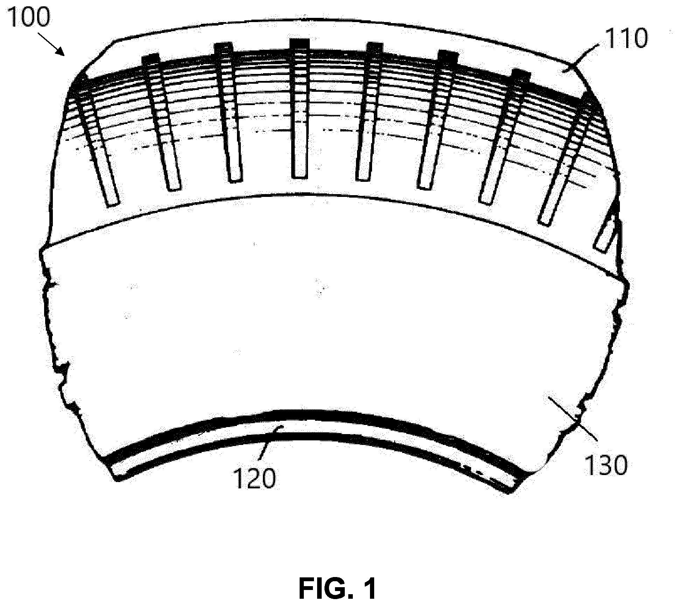

FIG. 1 is a partial side view of an example of a tire 100 in accordance with some embodiments of the present disclosure. The tire 100 includes a tread portion 110, a bead portion 120, and a sidewall portion 130 located between the tread portion 110 and the bead portion 120. The tread portion 110, bead portion 120, and sidewall portion 130 of tires in accordance with the present disclosure are not limited to the particular configuration depicted in FIG. 1. For example, there may be multiple sidewall portions, ribs, patterns, colors, etc. FIG. 1 is provided to illustrate one example of where the tire sidewall composition of the present disclosure may be utilized.

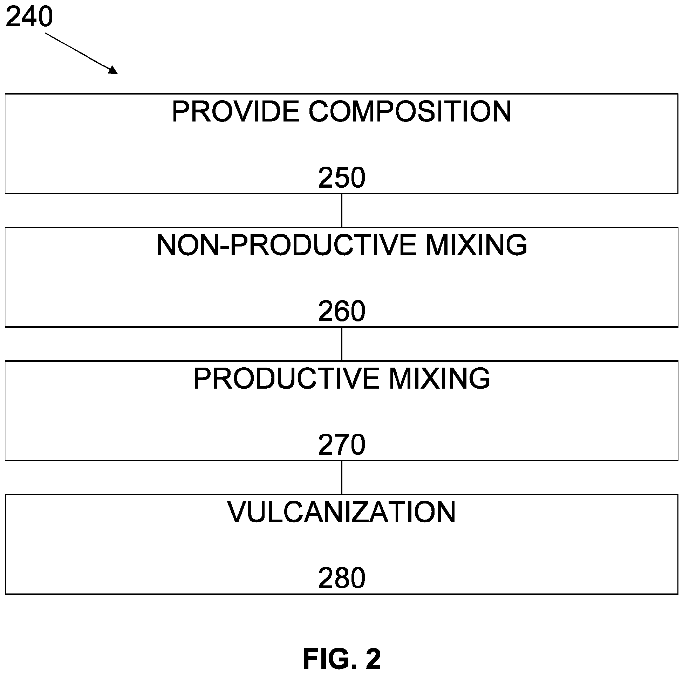

FIG. 2 is a flow chart illustrating an example of a process 240 of forming an article (e.g., a tire) in accordance with some embodiments of the present disclosure. The process 240 includes providing a tire sidewall composition 250, non-productive mixing 260, productive mixing 270, and vulcanization 280.

The disclosed invention unexpectedly allows for a reduction in wax level (e.g., a reduction of at least 25% from a typical wax level in a sidewall of up to 4 phr) and reduces or eliminates visible wax bloom in the vulcanized product. The inclusion of the disclosed cure package with rosin acid unexpectedly leads to a significant improvement in cut growth performance.

In one embodiment, the rosin acid may be mixed in the non-productive mixing stage 260 and the cure package may be mixed in the productive stage 270. The sulfur and accelerator(s) may be mixed with the non-productive mixture from stage 260 in productive mixing stage 270 prior to vulcanization 280.

### Rosin Acid

The rosin acid may be included in the composition in an amount of 0.25 phr to 3.0 phr. In some embodiments, the rosin acid content is 0.5 phr to 2.0 phr or from 1 phr to 2 phr.

### Diphenyl Guanidine

The diphenyl guanidine may be included in the composition in an amount of 0.25 phr to 3.0 phr. In some embodiments, the diphenyl guanidine content is 0.5 phr to 2.5 phr or from 0.75 phr to 1.5 phr.

### Tetra Benzyl Thiuram Disulfide

The tetra benzyl thiuram disulfide may be included in the composition in an amount of 0.25 phr to 2.5 phr. In some embodiments, the tetra benzyl thiuram disulfide content is 0.5 phr to 1.5 phr, 0.5 phr to 2 phr, or in a range of from 1.2 phr to 1.8 phr.

The composition provided to the non-productive mixing stage further contains at least one elastomer (e.g., at least one diene elastomer) and a reinforcement filler.

### Elastomers

In some embodiments, the elastomer(s) are selected from natural rubber, synthetic polyisoprene, and/or polybutadiene.

In particular embodiments, the at least one diene elastomer includes from 30 phr to 60 phr of natural rubber or synthetic polyisoprene and from 40 phr to 70 phr of cis 1,4-polybutadiene.

In particular embodiments, the at least one diene elastomer comprises from 50 to 70 phr, preferably from 60 to 70 phr, of natural rubber or synthetic polyisoprene, and from 30 phr to 50 phr, preferably from 30 to 40 phr, of polybutadiene rubber, preferably cis 1,4-polybutadiene rubber.

### Polybutadiene

In some embodiments, the polybutadiene is a cis 1,4-polybutadiene. However, in other embodiments, the polybutadiene is a lithium-produced polybutadiene. The lithium-produced polybutadiene may have a trans content of 45 to 55%, a cis content of 35 to 45%, and a vinyl content of 7.5 to 12.5%.

The cis 1,4-polybutadiene may be included in the composition in an amount of 10 to 60 phr. In some embodiments, the cis 1,4-polybutadiene content is 20 to 50 phr, including 30 to 40 phr or 35 phr.

In this application, a reference to a cis 1,4-polybutadiene means that the cis 1,4 content of the cis 1,4-polybutadiene is at least 90%, preferably at least 95%, at least 96%, at least 97%, or at least 98%.

Examples of suitable cis 1,4-polybutadienes include BUDENE^{®} 1207, BUDENE^{®} 1208, BUDENE^{®} 1208G, BUDENE^{®} 1208W, BUDENE^{®} 1280, BUDENE^{®} 1222, BUDENE^{®} 1223, and BUDENE^{®} 1224, all of which are available from The Goodyear Tire and Rubber Company.

The lithium-produced polybutadiene generally has a higher trans than cis content. The lithium-produced polybutadiene may have a glass transition temperature (T_{g}) in a range of - 92 to -88 °C.

### Polyisoprene or cis 1,4-polyisoprene

The polyisoprene or cis 1,4-polyisoprene rubber may be natural or synthetic rubber. In some preferred embodiments, the polyisoprene is a natural rubber.

The cis 1,4-polyisoprene may be included in the composition in an amount of 40 to 70 phr.

Examples of natural rubber grades include TSR10 and TSR20.

### Filler

The filler may be included in an amount of from 30 phr to 70 phr, preferably from 35 phr to 55 phr or from 40 to 60 phr. Preferably, filler comprises from 40 to 60 phr of carbon black. In some embodiments, the filler is free to silica.

Representative examples of rubber reinforcing carbon blacks are referenced in The Vanderbilt Rubber Handbook, 13th edition, year 1990, on Pages 417 and 418 with their ASTM designations. As indicated, such rubber reinforcing carbon blacks may have iodine absorptions (measure of particle size) ranging from, for example, 60 to 240 g/kg and DBP (dibutyl phthalate; measurement of structure) values ranging from 34 to 150 cc/100 g. One example of a suitable carbon black is ASTM N326 which has an approximate DBP value of 72 and an approximate Iodine number of 82.

The reinforcing filler typically includes carbon black and optionally silica (e.g., synthetic precipitated silica). A total amount of filler may be in the range of 30 phr to 70 phr, preferably from 35 phr to 55 phr. The disclosure contemplates that carbon black would make up the majority filler content when carbon black and silica are used in combination.

The precipitated silica reinforcement may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Various commercially available precipitated silicas may be used, such as for example silicas from PPG Industries under the Hi-Sil trademark with designations 210, 243, 315; silicas from Solvay with, for example, designations of Zeosil 1165MP^{™} and Zeosil 165GR^{™}; silicas from Evonik with, for example, designations VN2 and VN3; and chemically treated (pre-hydrophobated) precipitated silicas such as for example Agilon^{™} 400 from PPG.

A coupling agent may be included, however in some embodiments the rubber composition does not contain any coupling agent even when carbon black and silica are used as the filler.

The rubber composition optionally may also contain up to 15, alternatively 2 to 15, phr of at least one additional diene-based elastomer selected from at least one of organic solvent solution polymerization prepared, or emulsion polymerization prepared, styrene/butadiene copolymer rubber, isoprene/butadiene copolymer, and styrene/isoprene/butadiene terpolymer. Said additional solvent polymerization prepared elastomer may also be a tin coupled elastomer.

The rubber compositions can be prepared by simple mixing. In some embodiments, the mixing will be carried out utilizing an internal rubber mixer or an open roll (e.g., dual opposing rolls) mill mixer. An internal rubber mixer is preferred, and it is generally preferred to mix the triglyceride oil and filler into the elastomer composition during at least one non-productive compounding stage. With reference to FIG. 2, this may be referred to as a non-productive mixing stage 260.

The rubber compositions of the present disclosure optionally contain one or more additional compounding ingredients and/or additives. Typical amounts of processing aids and rubber compounding ingredients comprise 1 to 50 phr. Such processing aids can include, for example, aromatic, naphthenic, paraffinic processing oils, vegetable triglyceride, and plant-derived oils. Stearic acid can be present, although the embodiments contemplate rosin acid as a replacement of stearic acid.

Vulcanization 280 is conducted in the presence of the disclosed cure package.

Accelerators are used to control the time and/or temperature required for vulcanization and to improve the properties of the vulcanizate. Combinations of the disclosed accelerators produce a synergistic effect on the final properties and are better than those produced by use of either accelerator alone. Examples of sulfenamide accelerators include N-oxydiethylene benzothiazole-2-sulfenamide, N-t-butyl-2-benzothiazolesulfenamide and N-cyclohexyl-2-benzothiazolesulfenamide.

The compositions in accordance with the present disclosure exhibit improved appearance while maintaining critical cured properties of ozone resistance, tear, and cut growth.

The following examples are provided to illustrate the devices and methods of the present disclosure.

### EXAMPLES

Examples were produced using a combination of rosin acid and diphenyl guanidine in a tire sidewall compound. A significant reduction in wax level was enabled and tires with no visible wax bloom and a much better looking surface and excellent static ozone protection can be produced.

| Composition, based on 100 phr elastomer | Control | Exp'I A | Exp'I B (Inventive) |
|---|---|---|---|
| Natural Rubber | 65 | 65 | 65 |
| *Cis*-PPD | 35 | 35 | 35 |
| Carbon Black | 50 | 50 | 50 |
| Processing Oil, A/O, and other additives | In equal parts | | |
| Wax | 3 | 2.2 | 1 |
| Rosin Acid | 0 | 1.5 | 1.5 |
| 6PPD | 4.3 | 4.75 | 4.0 |
| Sulfur | 2.2 | 2.2 | 2.2 |
| Sulfenamide | 0.75 | 0.75 | 0.25 to 0.75 |
| DPG | 0 | 0.25 | 1.0 |
| TBZD | 0 | 0 | 1.5 |
| Visible Bloom | Reference | Improved | Substantially Improved (no Bloom) |
| Static Ozone | Reference | Improved | Substantially Improved |
| Dynamic Ozone | Reference | Equal | Improved |
| Cut Growth | Reference | Worse | Equal (to Control) |
| Tear Strength | Reference | Equal | Equal |

The invention in Experimental B shows equivalent performance with an improvement in dynamic, ozone, and cut growth.

## Claims

1. A tire having a visible sidewall (130), the visible sidewall (130) comprising a rubber composition, the rubber composition comprising, based on parts by weight per 100 parts by weight rubber (phr):
(A) a blend of polymers comprising at least a polyisoprene and polybutadiene;
(B) a reinforcing filler comprising at least one of silica and carbon black, or a combination of both;
(C) a cure package comprising sulfur; and
(D) at least three accelerators including a diphenyl guanidine, a tetra benzyl thiuram disulfide and a sulfenamide.

2. The tire of claim 1, wherein the amount of tetra benzyl thiuram disulfide is in a range of from 0.25 to 2.5 phr, preferably in a range of from 0.5 to 2 phr or in a range of from 1.2 phr to 1.8 phr.

3. The tire of at least one of the previous claims, wherein the amount of the diphenyl guanidine is in a range of from 0.25 phr to 3.0 phr, preferably from 0.5 phr to 2.5 phr or from 0.75 phr to 1.5 phr.

4. The tire of at least one of the previous claims, wherein the amount of sulfenamide is in a range of from 0.15 phr to 2.5 phr, preferably in a range of from 0.25 phr to 1 phr.

5. The tire of at least one of the previous claims, wherein the polyisoprene is natural rubber, synthetic polyisoprene, or a combination thereof.

6. The tire of at least one of the previous claims, wherein the rubber composition comprises from 30 phr to 60 phr of natural rubber or synthetic polyisoprene, and from 40 phr to 70 phr of polybutadiene rubber, preferably cis 1,4-polybutadiene rubber.

7. The tire of at least one of the previous claims 1 to 5, wherein the rubber composition comprises from 50 to 70 phr, preferably from 60 to 70 phr, of natural rubber or synthetic polyisoprene; and from 30 phr to 50 phr, preferably from 30 to 40 phr, of polybutadiene rubber, preferably cis 1,4-polybutadiene rubber.

8. The tire of at least one of the previous claims, wherein the amount of filler is in a range of from 30 phr to 70 phr.

9. The tire of at least one of the previous claims, wherein the reinforcing filler comprises from 40 to 60 phr of carbon black and/or wherein the reinforcing filler is free to silica.

10. The tire of at least one of the previous claims, wherein the reinforcing filler comprises a blend of carbon black and silica.

11. The tire of at least one of the previous claims, wherein the rubber composition further comprises rosin acid.

12. The tire of claim 11, wherein the amount of rosin acid is in a range of from 0.25 phr to 3.0 phr, preferably from 0.5 phr to 2.0 phr or from 1 phr to 2 phr.

13. The tire of at least one of the previous claims, wherein the rubber composition comprises at least a 25% reduction in wax relative to a compound devoid rosin acid and the cure package and/or wherein the rubber composition comprises at least a 25% reduction in 6PPD relative to a compound devoid rosin acid and the cure package.

14. The tire of at least one of the previous claims, wherein the rubber composition is partially or fully devoid of wax; and/or wherein the rubber composition comprises less than 2 phr of wax, preferably from 0.5 phr to 1.5 phr of wax.

15. The tire of at least one of the previous claims, wherein the rubber composition comprises 1.8 to 2.5 phr of sulfur.
